# EUROPEAN PATENT APPLICATION

(11) **EP 4 410 112 A1**
(43) Date of publication of application: **07.08.2024**
(21) Application number: 22876406.4
(22) Date of filing: 28.09.2022
(51) Int. Cl.: A23L 5/00, A23L 13/00, A23L 13/60

(54) **SOLID FOOD AND METHOD FOR PRODUCING SAME, AND METHOD FOR PROVIDING TEXTURE TO SOLID FOOD**

(30) Priority: 30.09.2021 JP 2021161280
(71) Applicant: Hayashibara Co., Ltd., Okayama-shi, Okayama 702-8006 (JP)
(72) Inventor: OKADA Sawako, Okayama-shi Okayama 702-8006 (JP); HASHIMOTO Satoko, Okayama-shi Okayama 702-8006 (JP); KAKUTA Shoji, Okayama-shi Okayama 702-8006 (JP)
(74) Representative: Page White Farrer
(86) International application number: PCT/JP2022/036318
(87) International publication number: WO 2023/054540

(57) **Abstract**

An object of the present invention is to provide a protein-containing solid food that has both the excellent texture and dietary fiber properties, and the above object is attained by providing a solid food comprising a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein.

## Description

### Technical Field

The present invention relates to a solid food containing a cyclic tetra saccharide having a structure of cyclo{→6)-α-D-glucopyranosyl-(1→3)-α-D-glucopyranosyl-(1→6)-α-D-glucopyranosyl-(1→3)-α-D-glucopyranosyl-(1→} and/or its glycosylated derivative and a protein.

### Background Art

As the importance of building a sustainable society increases, there is a growing demand for meat or fish-meat alternatives, which are food products made of proteins primarily derived from plants, replacing livestock meats such as beef, pork, and chicken, as well as seafoods such as fish, shellfish, shrimp, and crab, from viewpoints of insufficient supply of meat with increasing population, environmental protection, and animal welfare.

In particular, processed meat products such as sausages, hamburger steaks, nuggets, as well as processed seafood products such as kamaboko (steamed fish cakes), chikuwa (baked or steamed fish cakes), and fish sausages, are popular and familiar to people of all ages, from children to adults, and people in various countries around the world. Therefore, there is a strong demand for the development of meat alternative products, mimicking these processed meat and seafood products, i.e., processed meat-like products and processed seafood-like products. The desirable texture, including elastic texture, of these processed meat and seafood products are achieved through the gelation of proteins in their manufacturing process, and the control of the gelation properties of proteins plays an important role in achieving the desirable textures inherent to processed meat and seafood products. However, plant-derived proteins are less prone to gelation compared to proteins derived from meats and the like. As a result, it is known that achieving the desirable texture similar to processed meat and seafood products is challenging in processed meat-like and seafood-like foods that primarily use plant-derived proteins instead of proteins derived from livestock meats or seafoods. Therefore, research to improve the texture of processed meat-like and seafood-like products is actively being conducted (e.g., Patent Literature 1 and Patent Literature 2).

On the other hand, due to the increasing awareness of healthy eating habits, there is a growing demand for food products containing dietary fiber materials that offer various health benefits such as low-calorie content and promotion of intestinal function. This also applies to processed meat-like and seafood-like products. Dietary fiber materials include insoluble dietary fibers such as cellulose and hemicellulose, which are insoluble in water. Because insoluble dietary fibers are insoluble in water, addition of insoluble dietary fibers to food products may sometimes compromise the original texture of the food products. On the other hand, water-soluble dietary fibers can be further categorized into high-viscosity water-soluble dietary fibers and low-viscosity water-soluble dietary fibers. Examples of high-viscosity water-soluble dietary fibers include but not limited to pectin, guar gum, glucomannan, and sodium alginate. However, these high-viscosity water-soluble dietary fibers result in highly viscous solutions and may even form a gel during manufacturing or processing, making them difficult to handle. Additionally, addition of only small amounts of them significantly increases viscosity, which makes it nearly impossible to obtain food products with sufficient amounts of dietary fibers and uncompromised texture using high-viscosity water-soluble dietary fibers. In contrast, low-viscosity water-soluble dietary fibers such as indigestible dextrin, resistant glucan, and polydextrose have good handling properties, such that they exhibit excellent water solubility and their aqueous solutions show low viscosity. Furthermore, their formulation into food products has minimal impact on the texture. Thus, low-viscosity water-soluble dietary fibers are widely used in various food and beverage products.

However, low-viscosity water-soluble dietary fibers widely used in the food industry, such as indigestible dextrin, resistant glucan, and polydextrose, are known to locally inhibit the heat-induced gelation of proteins and impair the firmness and elasticity of the resulting food products, as described, for example, in paragraph [0016] of Patent Literature 3. As such, in processed meat and seafood products containing meat- or seafood-derived proteins, it was not easy to achieve both desirable texture and dietary fiber properties, even when low-viscosity water-soluble dietary fibers are used. Moreover, it has been considered extremely difficult to achieve both desirable texture and dietary fiber properties by using low-viscosity water-soluble dietary fiber in processed meat-like or seafood-like products, etc. that contain plant-derived proteins that are less prone to gel instead of livestock meat or seafood-derived proteins.

On the other hand, cyclic tetrasaccharide is a compound with a cyclic structure composed of four glucose molecules, in other words, a structure represented by cyclo{→6)-α-D-glucopyranosyl-(1→3)-α-D-glucopyranosyl-(1→6)-α-D-glucopyranosyl-(1→3)-α-D-glucopyranosyl-(1→}. The cyclic tetrasaccharide has been discovered by Cote *et al.* in 1994 (Non-Patent Literature 1), and their mass production methods were subsequently established by the present applicants (Patent Literatures 4, 5, and 6). The cyclic tetrasaccharide is not substantially digested or absorbed when orally ingested, is resistant to fermentation by intestinal bacteria, and exhibits excellent water solubility. Accordingly, they can be used as low-calorie water-soluble dietary fiber materials (Patent Literatures 4, 5, and 6). However, to the best of the present inventors' knowledge, there are no reports on processed meat-like or seafood-like products containing the cyclic tetrasaccharide and on their textures.

### Citation List

### Patent Literature

[Patent Literature 1] Japanese Patent Application Publication No. 2021-013356
[Patent Literature 2] Japanese Patent Application Publication No. 2021-132587
[Patent Literature 3] Japanese Patent Application Publication No. 2019-010050
[Patent Literature 4] International Publication No. WO2001/090338
[Patent Literature 5] International Publication No. WO2002/010361
[Patent Literature 6] International Publication No. WO2021/066159

### Non-Patent Literature

[Non-Patent Literature 1] Gregory L. Cote, Peter Biely, European Journal of Biochemistry, Volume 226, Issue 2, Pages 641-648 (1994).

### Summary of Invention

### Technical Problem

The present invention was made in view of the above-described problems of the prior arts, and an object of the present invention is to provide a protein-containing solid food that has both the excellent texture and dietary fiber properties.

### Solution to Problem

The present inventors accumulated research efforts in order to attain the above object and surprisingly found that a cyclic tetrasaccharide represented by the chemical structure of cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof are very different from other conventional low-viscosity water-soluble dietary fibers and able to produce solid foods with excellent texture, even when used with various protein materials, including plant-derived proteins. Thereby, the present inventors accomplished the present invention.

The present invention attains the above object by providing the following [1] to [7].
[1] A solid food comprising a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein.
[2] The solid food according to the above [1], wherein said protein is a plant-derived protein or an egg-derived protein.
[3] The solid food according to the above [2], wherein said plant-derived protein is a protein derived from a plant in the family Fabaceae and said egg-derived protein is a protein derived from a chicken egg.
[4] The solid food according to any one of the above [1] to [3], wherein the content of said cyclic tetrasaccharide and/or glycosyl derivative thereof based on the total tetrasaccharide content is equal to or exceeding 1% by mass of the total mass of the solid food.
[5] The solid food according to the above [4], wherein the mass ratio (A:B) of the content (A) of said cyclic tetrasaccharide and/or glycosyl derivative thereof based on the total tetrasaccharide content and the content (B) of said protein is in the range of 1:0.1 to 1:20.0.
[6] A method for producing a solid food comprising a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein, which comprises:
   a step of preparing a mixture comprising said cyclic tetrasaccharide and/or glycosyl derivative thereof, and said protein; and
   a step of heating the obtained mixture.
[7] A method for imparting a texture to a solid food, characterized in that a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof is used in place of a part or whole of a saccharide when manufacturing the solid food which contains a protein and whose texture is to be imparted by adding the saccharide and then heating during its production process.

### Effects of Invention

In accordance with the present invention, a solid food with both excellent texture and dietary fiber properties may be provided.

### Brief Description of Drawings

[Figure 1] The figure showing the measurement results of breaking loads of soy foods in gel forms prepared by incorporating a sugar, a cyclic tetrasaccharide syrup, or an indigestible dextrin with a soy protein.
[Figure 2] The figure showing the measurement results of breaking loads of soy foods in curd forms prepared by incorporating a maltooligosaccharide, a cyclic tetrasaccharide syrup, an indigestible dextrin, a polydextrose, or a resistant glucan with a soy protein.
[Figure 3] The figure showing the measurement results of breaking loads of soy foods in curd forms prepared by incorporating varying amounts of a cyclic tetrasaccharide syrup with a soy protein.
[Figure 4] The figure showing the measurement results of breaking loads of egg food products in gel forms prepared by incorporating a sugar, a cyclic tetrasaccharide syrup, an indigestible dextrin, a resistant glucan, or an inulin with a chicken egg.
[Figure 5] The figure showing the measurement results of breaking loads of egg food products in gel forms prepared by incorporating a cyclic tetrasaccharide syrup, a cyclic tetrasaccharide pentahydrate crystal, or a sugar with a chicken egg.

### Description of Embodiments

Below, the present invention is described in further detail.

In one aspect, the present invention is related to a solid food containing a cyclic tetrasaccharide and/or a glycosyl derivative thereof, and a protein. The term "cyclic tetrasaccharide and/or glycosyl derivative thereof", "protein", and "solid food" containing these are explained in this order. In the present description, a numerical range expressed by an expression of "A to B", for example, "1:0.1 to 1:20.0", means the numerical range including both the upper limit and the lower limit, unless otherwise noted.

### <Cyclic Tetrasaccharide and Glycosyl Derivative Thereof>

A solid food in accordance with the present invention comprises a cyclic tetrasaccharide and/or a glycosyl derivative thereof. The cyclic tetrasaccharide is a compound having a cyclic structure consisted of four glucose molecules alternately bonded via α-1,6 and α-1,3 bonds, in other words, a structure represented by cyclo{→6)-α-D-glucopyranosyl-(1→3)-α-D-glucopyranosyl-(1→6)-α-D-glucopyranosyl-(1→3)-α-D-glucopyranosyl-(1→}, i.e., cyclic nigerosyl nigerose. On the other hand, the glycosyl derivative of the cyclic tetrasaccharide is a compound having a structure in which a branched structure consisting of one or more monosaccharides is bonded to a cyclic tetrasaccharide represented by cyclo{→6)-α-D-glucopyranosyl-(1→3)-α-D-glucopyranosyl-(1→6)-α-D-glucopyranosyl-(1→3)-α-D-glucopyranosyl-(1→}. Hereinafter, the glycosyl derivative of the cyclic tetrasaccharide may be referred to as "branched cyclic tetrasaccharide" in this description. Although the monosaccharide bound to the cyclic tetrasaccharide in the glycosyl derivative of the cyclic tetrasaccharide may be any monosaccharide, it may be preferably glucose. In the glycosyl derivative of the cyclic tetrasaccharide, any number of monosaccharides may be bonded to the cyclic tetrasaccharide. However, the number of monosaccharides bonded to the cyclic tetrasaccharide may be preferably one to six, more preferably one to four, and further preferably one to two. Examples of the glycosyl derivatives of the cyclic tetrasaccharide include but not limited to, for example, a branched cyclic tetrasaccharide in which glucose is bonded via an α-1,4 glycosidic bond to one of the four glucose moieties constituting the cyclic tetrasaccharide, and a branched cyclic tetrasaccharide in which isomaltose is bonded via an α-1,3 glycosidic bond to one of the four glucose moieties constituting the cyclic tetrasaccharide. The solid food in accordance with the present invention may contain one, two, or more kinds of the above-described cyclic tetrasaccharide and/or glycosyl derivatives thereof.

The cyclic tetrasaccharide and/or glycosyl derivative thereof used in the solid food in accordance with the present invention may be an isolated and/or purified one. However, they do not necessarily have to be isolated and purified. For example, they may be in a form of a composition containing the cyclic tetrasaccharide and/or glycosyl derivative thereof. Examples of such compositions include, but not limited to a composition containing the cyclic tetrasaccharide and the branched cyclic tetrasaccharide prepared by a method shown in International Publication No. WO2021/066159, or a commercially available product "TetraRing" (Registered Trademark) (manufactured by Hayashibara Co., Ltd.). These compositions are saccharide compositions in syrup forms containing the cyclic tetrasaccharide and the branched cyclic tetrasaccharide which has a structure wherein one or more glucoses are bound to the cyclic tetrasaccharide structure. As these compositions may be produced with fewer purification processes and supplied at lower costs, they may be advantageously used in industrial standpoints. When the cyclic tetrasaccharide and/or glycosyl derivative thereof used in the solid food in accordance with the present invention is in the form of a composition, the composition may further comprise a concomitant saccharide, such as glucose, maltose, isomaltose, glucose disaccharides with other bonding structure, maltotriose, isomaltotriose, panose, glucose trisaccharides with other bonding structure, and glucose oligosaccharides with a degree of polymerization of 4 or higher with a bonding structure other than the cyclic tetrasaccharide and/or glycosyl derivatives thereof.

Meanwhile, as already described, the cyclic tetrasaccharide and/or glycosyl derivative thereof may be an isolated and/or purified one. The isolate and/or purified cyclic tetrasaccharide and/or glycosyl derivatives thereof may be obtained, for example, by purifying a composition containing the cyclic tetrasaccharide using chromatography, etc. The cyclic tetrasaccharide and/or glycosyl derivative thereof purified by chromatography, etc. may be further crystallized and/or dried to form a crystalline powder. Crystals of the cyclic tetrasaccharide may include an anhydrous crystal of the cyclic tetrasaccharide and a pentahydrate crystal of the cyclic tetrasaccharide. The cyclic tetrasaccharide and its crystalline powder may be produced, for example, by a method disclosed in International Publication No. WO2002/010361 or a method in accordance with the method. On the other hand, a glycosyl derivative of the cyclic tetrasaccharide and its crystalline powder may be produced, for example, by a method disclosed in International Publication No. WO2002/072594 or a method in accordance with the method.

### <Protein>

A protein contained in the solid food in accordance with the present invention may be any protein that is available for use in food products. Examples of such proteins include proteins derived from livestock meats such as beef, pork, sheep meat, chicken meat and duck meat; proteins derived from seafoods such as fish, shellfish, octopus, squid, shrimp, and crabs; and proteins derived from insects, reptiles, amphibians, etc. Preferably, it may a plant-derived protein and/or an egg-derived protein, further preferably it may be a plant-derived protein. The plant-derived proteins include, of course, proteins derived from plants in the family *Fabaceae*, in the family Poaceae, in the genus *Millet*, etc., but proteins derived from algae such as *Chlamydomonas* and *Spirulina* are also included in the plant-derived proteins as referred to in the present description. As the plant-derived protein, a protein derived from a plant in the family *Fabaceae* may be preferably used. Examples of plants in the family Fabaceae include but not limited to soybeans (*Glycine max*), peas (*Pisum sativum L.*), fava beans (*Vicia faba L.*), peanuts (*Arachis hypogaea L.*), azuki beans (*Vigna angularis*), and kidney beans (*Phaseolus vulgaris L.*). Meanwhile, proteins derived from eggs include a protein derived from fish eggs and bird eggs such as chicken eggs, quail eggs, duck eggs, and ostrich eggs, but are not limited to thereto.

The solid food in accordance with the present invention may contain one, two, or more kinds of the above-described proteins.

The protein of any type may be used in the solid food of the present invention. However, purified protein materials, such as protein concentrates or protein isolates obtained by purifying proteins from protein-containing raw materials may be preferably used. Protein concentrates and/or protein isolates may be preferably those with protein content of 70% by mass or higher on dry solid basis, and further preferably those with protein content of 80% by mass or higher on dry solid basis. These protein materials may be in any form. For example, the protein materials in powder, granule, or grain form may be preferably used, depending on the type of foods to be produced. When purified protein materials, such as protein concentrates and/or protein isolates, are used as protein materials, the proteins and the cyclic tetrasaccharide and/or glycosyl derivative thereof can be mixed uniformly, enabling more uniform gelation of solid foods. This gives advantages that it becomes easier to produce solid foods with excellent texture and also that quality control of the produced solid foods becomes easier.

In one preferred embodiment, the protein comprised in the solid food of the present invention may be a heat-coagulable protein that exhibits the property of forming a gel by heating. Herein, "forming a gel by heating" means forming a gel in a heated state, which is different from forming a gel when being cooled after heating, or also different from forming a gel via ionic cross-linking reaction by simply mixed physically. In many solid foods comprising proteins, including processed meat products and processed seafood products, proteins comprised in the solid foods form a gel when the entire food is heated during its production process. This is how many solid foods containing protein become to exhibit a property of maintaining a consistent shape (hereinafter referred to as "shape retention property" in the present description) and become to exhibit an excellent texture, such as elasticity.

It is known that saccharides existing together with proteins play an important role in the gelation of proteins by heating in the food production process. Therefore, saccharides such as sugar and maltooligosaccharides are used to control the tastes and textures in many processed meat products and processed seafood products. However, low-viscosity water-soluble dietary fiber materials conventionally used in the food industry, such as indigestible dextrin, resistant glucan, and polydextrose, are known to locally inhibit the gelation of proteins by heating and impair the firmness and elasticity of the resulting food products, for example, as shown in Patent Literature 3. Therefore, even in processed meat and seafood products containing meat- or seafood-derived proteins, it was not easy to achieve both desirable texture and dietary fiber properties when incorporating low-viscosity water-soluble dietary fiber materials. In this background, it was considered extremely difficult to achieve a favorable texture when incorporating low-viscosity water-soluble dietary fibers in processed meat-like or seafood-like products that use, as the main ingredient, plant-derived proteins, which are considered to be less likely to form a gel by heating compared to meat- or seafood-derived proteins. In contrast, as shown later in the experimental examples, when the cyclic tetrasaccharide and/or glycosyl derivative thereof are used as water-soluble dietary fiber materials, solid foods with excellent texture can be advantageously obtained even when plant-derived proteins are used as the main ingredient.

### <Solid Food>

The present invention relates to a solid food comprising the above-described cyclic tetrasaccharide and/or glycosyl derivative thereof and the protein. The term "solid food" used in the present description refers to a food product that exhibits a property of maintaining a consistent shape at room temperature (25°C), i.e., a shape retention property. Food products in a jelly or gel form are included in the solid food as referred to in the present description, as long as they possess the shape retention property.

The solid foods are distinct from non-solid foods, such as liquids, which exhibit fluidity, in that the breaking stress is measurable in the solid foods. In other words, when external force is applied to a solid food, stress is generated within the solid food in response to the applied external force. Once the stress reaches a certain value, the solid food breaks as it cannot withstand the stress. This point is called "breaking point" and the stress at this point is called "breaking stress". On the other hand, non-solid foods, such as liquids, which show fluidity, readily deform plastically when external force is applied to them. Therefore, the breaking stress cannot be measured and the breaking point is not shown in non-solid foods. In other words, it can be said that the solid foods are food products that show the breaking point in the breaking test, whereas non-solid foods are those that do not show the breaking point. To be added, the breaking stress of the solid foods can be an indicator of the texture and elasticity of the solid foods.

The presence or absence of the breaking point and the breaking stress can be evaluated by the breaking test using a commercially available creep meter. For example, the condition for the breaking test is as shown below:

### <Breaking Test>

- Creep meter: Model "RE2-33005C" (manufactured by YAMADEN Co., Ltd.)
- Plunger: Cylindrical plunger with a diameter of 16 mm
- Measurement speed: 0.5 to 1.0 mm/sec
- Temperature of sample: Room temperature (25°C)

There is no particular restriction on the magnitude of the breaking stress of the solid food in accordance with the present invention, as long as breaking stress is measurable. Typically, the breaking stress of the solid food in accordance with the present invention may be 1 × 10³ N/m² or more.

As described above, in many solid foods containing proteins, the proteins contained in the solid food undergo gelation when the entire food is heated during their manufacturing processes. Thereby, the solid foods containing proteins become to exhibit the shape-retention property as well as the excellent texture, such as the elastic texture. In other words, in one preferred embodiment, the solid food in accordance with the present invention may be said to be a solid food formed by gelation of a mixture of the cyclic tetrasaccharide and/or glycosyl derivative thereof and the protein by heating. In such a solid food, the mixture of the cyclic tetrasaccharide and/or glycosyl derivative thereof and the protein is contained in a gel state.

The solid food of the present invention may be provided as any type of food products, including processed meat products, processed meat-like products, processed seafood products, processed seafood-like products, or processed egg products, for example. But it may be preferably provided as processed meat-like products or processed seafood-like products. The processed meat-like products or processed seafood-like products refer to processed food products produced by using a plant-derived material in place of a livestock meat, fish meet, seafood, or a material derived from these, as a main ingredient. Examples of processed meat products or processed meat-like products include but not limited to ground meats, restructured meats, cut meats, and food products using these, such as sausages, hams, nuggets, hamburger steaks, meatballs, meatloafs, patties, tsumire, tsukune, menchikatsu, meat croquettes, Siu Mai filling, dumpling filling, xiaolongbao filling, bun filling, instant noodle toppings, fried rice toppings, fried foods, pork cutlets, beef cutlets, tempura, steaks, grilled meats, char siu, steamed chicken, fried chicken, etc. Examples of processed seafood products or processed seafood-like products include but not limited to kamaboko, chikuwa, fish sausage, fish flakes, hanpen, tsumire, satsuma-age, fish fillets, and fried, tempura, kabayaki, sashimi, simmered dishes, tsukudani, etc. using fish fillets. Examples of processed egg products include but not limited to chawanmushi (steamed egg custard), rolled omelet, boiled egg, omelet, scrambled egg, pudding, etc. Processed egg-like products prepared by using a plant-derived material in place of an egg-derived material may be also provided in these forms. The above-described solid foods may be provided also as pet foods or feeds.

The solid food in accordance with the present invention may contain any amount of the cyclic tetrasaccharide and/or glycosyl derivative thereof. However, from the viewpoint of obtaining a solid food with the high dietary fiber property and the favorable texture, the content of the cyclic tetrasaccharide and/or glycosyl derivative thereof in the solid food may be 1% by mass or higher, preferably 2% by mass or higher, more preferably 3% by mass or higher, and further preferably 5% by mass or higher of the total mass of the solid food, in terms of the total cyclic tetrasaccharide content. On the other hand, although there is no upper limit for the content of the cyclic tetrasaccharide and/or glycosyl derivative thereof in the solid food of the present invention, it may be 50% by mass or lower of the total mass of the solid food, in terms of the total cyclic tetrasaccharide content, for example.

In the present description, the term "total cyclic tetrasaccharide content" of the cyclic tetrasaccharide and/or glycosyl derivative thereof refers to the content of the cyclic tetrasaccharide (% by mass), on a dry solid basis, in the total solids of a saccharide composition obtained by allowing glucoamylase and α-glucosidase to act on the cyclic tetrasaccharide and/or glycosyl derivative thereof. The total cyclic tetrasaccharide content of the cyclic tetrasaccharide and/or glycosyl derivative thereof may be measured by an analysis method of the total cyclic tetrasaccharide content described in International Publication No. WO2021/066159, or a method in accordance with the method. When the glycosyl derivative of the cyclic tetrasaccharide is treated with glucoamylase and α-glucosidase, the branched structure in the glycosyl derivative of the cyclic tetrasaccharide is degraded to glucose. On the other hand, the cyclic tetrasaccharide is not degraded by the action of glucoamylase and α-glucosidase. Therefore, the resulting product obtained by allowing glucoamylase and α-glucosidase to act on the cyclic tetrasaccharide and/or glycosyl derivative thereof contains essentially only the cyclic tetrasaccharide and monosaccharides. Therefore, the cyclic tetrasaccharide content in the resulting product reflects the amount of cyclic tetrasaccharide structures comprised in the cyclic tetrasaccharide and/or glycosyl derivative thereof. Accordingly, the "total cyclic tetrasaccharide content" of the cyclic tetrasaccharide and/or glycosyl derivative thereof expresses the content of the cyclic tetrasaccharide and/or glycosyl derivative thereof in the solid foods in terms of the content of cyclic tetrasaccharide structures.

On the other hand, the solid food in accordance with the present invention may contain any amount of the protein. However, from the viewpoint of obtaining the solid foods with favorable texture, the content of the protein in the solid food in accordance with the present invention may be preferably 5 to 20% by mass and more preferably 10 to 15% by mass of the total mass of the solid food.

The solid food in accordance with the present invention may contain the cyclic tetrasaccharide and/or glycosyl derivative thereof and the protein at any ratio. However, from the viewpoint of obtaining the solid foods with favorable texture, in the solid food in accordance with the present invention, the mass ratio [(A):(B)] of the content (A) of the cyclic tetrasaccharide and/or glycosyl derivative thereof in terms of the total cyclic tetrasaccharide content and the content (B) of the protein may be preferably in the range of 1:0.1 to 1:20.0, more preferably in the range of 1:0.5 to 1:15.0, and further preferably in the range of 1:0.5 to 1;10.0.

Meanwhile, the solid food in accordance with the present invention may contain water at any amount. However, from the viewpoint of achieving the favorable texture by the gelation of the solid foods, the water content in the solid food may be in the range of 5 to 90% and preferably in the range of 10 to 80%. When the water content is too low or too high, achieving the uniform gelation of the protein becomes difficult and therefore it is difficult to attain the favorable texture.

Furthermore, the dietary fiber content of the solid food in accordance with the present invention may not be limited. However, from the viewpoint of the dietary fiber property, the dietary fiber content in the solid food may be, for example, 1% by mass or more, preferably 3% by mass or more, and more preferably 6% by mass or more. The dietary fiber content in the solid foods may be measured in accordance with the method described in Section 8, Dietary Fiber, (2) High Performance Liquid Chromatography Method (Enzyme-HPLC Method), in "Methods for analyzing nutritional components (Appendix 1-3 of Nutritional Labeling Standard)" in "Nutritional Labeling Standard (Notification No. 146 of Ministry of Health, Labour, and Welfare, May, 1996)".

The solid food in accordance with the present invention may further comprise other food ingredients. There are no particular restrictions on the food ingredients that may be further comprised in the solid food in accordance with the present invention. For example, food ingredients that are usually used in food products, such as fats and oils, emulsifiers, salt, saccharides, seasonings, herbs and spices, acidifiers, preservatives, coloring agents, color-developing agents, thickeners, pH-adjusting agents, and antioxidants, may be incorporated. These food ingredients may be appropriately used to the extent that they do not interfere with the effects of the present invention.

### <Method for Producing Solid Food>

In one preferred embodiment, the present invention provides a method for producing a solid food, which comprises:
a step of preparing a mixture of a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein, and
a step of heating the resulting mixture.

The cyclic tetrasaccharide and/or glycosyl derivative thereof and the protein used in the method for producing a solid food in accordance with one embodiment of the present invention, as well as their amounts, have been already described above. From here on, each step of the method for producing a solid food in accordance of the embodiment of the present invention is described.

### (1) Mixing Step

This is a step of mixing the cyclic tetrasaccharide and/or glycosyl derivative thereof and the protein to prepare a mixture containing the cyclic tetrasaccharide and/or glycosyl derivative thereof and the protein. As described above, in many solid foods containing proteins, including processed meat product and processed seafood products, the proteins contained in the food undergo gelation when the entire food is heated during their manufacturing processes, and thereby the solid foods containing proteins become to exhibit the shape-retention property as well as the excellent texture. The uniform gelation of the entire solid foods is enabled by mixing and uniformly dispersing the cyclic tetrasaccharide and/or glycosyl derivative thereof and the protein, and results in the solid food with the favorable texture. The mixing may be carried out using a suitable stirring equipment commonly used in food manufacturing processes, such as cutter mixers, vertical mixers, or silent cutters.

The above-described mixture may further contain food ingredients commonly incorporated in food products, such as fats and oils, salt, saccharides, seasonings, herbs and spices, acidifiers, preservatives, coloring agents, color-developing agents, thickeners, pH-adjusting agents, antioxidants, etc. These food ingredients may be added after preparation of the mixture or before preparation of the mixture. When the food ingredients are added after preparation of the mixture, the resulting mixture may be preferably mixed further using a stirring equipment commonly used in food manufacturing processes, such as cutter mixers, vertical mixers, or silent cutters, after addition of the food ingredients.

In a preferred embodiment, the step of preparing the mixture containing the cyclic tetrasaccharide and/or glycosyl derivative thereof and the protein may be a step of preparing an emulsion containing the cyclic tetrasaccharide and/or glycosyl derivative thereof, the protein, a water, and a fat and/or oil, in other words, a step of preparing an emulsion containing the cyclic tetrasaccharide represented by cyclo{→6)-α-D-glucopyranosyl-(1→3)-α-D-glucopyranosyl-(1→6)-α-D-glucopyranosyl-(1→3)-α-D-glucopyranosyl-(1→} and/or glycosyl derivative thereof, the protein, a water, and a fat and/or oil. Herein, the emulsion may be a mixture in a curd form containing the cyclic tetrasaccharide and/or glycosyl derivative thereof, the protein, a water, and a fat and/or oil. In the step of preparing an emulsion, mixing may be conducted using a stirring equipment commonly used in food manufacturing processes, such as cutter mixers, vertical mixers, or silent cutters, after addition of the food ingredients.

The fat and oil used in the step of preparing an emulsion may be an animal-derived fat and oil, a plant-derived fat and oil, an emulsifying fat and oil, and/or combination of these. Examples of animal-derived fats and oils include lard (pig fat), beef tallow (beef fat), milk fat, whale oil, fish oil, etc. Examples of plant-derived fats and oils include rapeseed oil, soybean oil, rice oil, corn oil, sunflower oil, safflower oil, sesame oil, palm oil, cocoa butter, etc. Examples of emulsifying fats and oils include emulsifying fats and oils containing emulsifiers such as glycerol fatty acid esters, sucrose fatty acid esters, and lecithin. However, any type of fats and oils may be used in the step of preparing an emulsion. Appropriate fats and oils may be selected depending on the type of foods that are to be manufactured.

In the step of preparing an emulsion, the fats and oils may be incorporated at any amount. However, the total amount of the fats and oils may be, for example, 2 to 40% by mass and preferably 10 to 30% by mass of the total mass of the resulting emulsion. On the other hand, the protein and the cyclic tetrasaccharide and/or glycosyl derivative thereof may be also incorporated at any amount. However, the amount of the protein may be, for example, 2 to 40% by mass and preferably 10 to 30% by mass of the total mass of the resulting emulsion. The amount of the cyclic tetrasaccharide and/or glycosyl derivative thereof may be, for example, 10 to 30% by mass and preferably 10 to 30% by mass of the resulting emulsion.

The above-described emulsion may further contain food ingredients commonly incorporated in food products, such as salt, saccharides, seasonings, herbs and spices, acidifiers, preservatives, coloring agents, color-developing agents, thickeners, pH-adjusting agents, antioxidants, etc. These food ingredients may be added after preparation of the emulsion or before preparation of the emulsion. When the food ingredients are added after preparation of the emulsion, the resulting mixture may be preferably mixed further using a stirring equipment commonly used in food manufacturing processes, such as cutter mixers, vertical mixers, or silent cutters, after addition of the food ingredients.

### (2) Forming Step

The mixture (including the emulsion) obtained in the above step may be further formed into an appropriate shape. In other words, the method for producing a solid food in accordance with one preferred embodiment of the present invention may further contain a step of forming the obtained mixture. The mixture containing the cyclic tetrasaccharide and/or glycosyl derivative thereof and the protein may be formed into any shape. For example, it may be formed into bar shapes, lump shapes, ball shapes, etc., or into block meat shapes, cube meat shapes, ground meat shapes, thinly sliced meat shapes, etc., imitating the size and shape of real meats. Forming method may be any. For example, it may be formed by hand, or molded using a mold. An extruder or meat chopper, etc., may be also used for forming.

### (3) Heating Step

This is a step to induce gelation of the mixture or the formed product thereof containing the cyclic tetrasaccharide and/or glycosyl derivative thereof and the protein by heating.

In this step, any heating method may be employed, and an appropriate heating method may be selected depending of the type of foods that are to be produced. Examples of the heating methods include but not limited to steam heating, boiling, or frying. Steam heating may be conducted in any way, but a commercial convection steam oven or steamer may be used, for example. Meanwhile, boiling may be conducted in any way, but it may be conducted in hot water. When boiling in hot water, it may be preferable to heat the mixture in a state that it is filled in a container such as a bag or a mold, from the viewpoint of ease of heating operation.

The heating condition may not be particularly limited and appropriate heating condition may be used depending on the type of foods that are to be produced. For example, the heating temperature may be 60°C or higher and the heating time may be 10 mins or longer. However, the heating condition is not limited thereto.

As described above, the cyclic tetrasaccharide and/or glycosyl derivative thereof can impart both the dietary fiber properties and the favorable texture equivalent to the texture obtained when using a saccharide to a protein-containing solid food whose texture is imparted by adding the saccharide and then heating during its manufacturing process. Therefore, the cyclic tetrasaccharide and/or its glycosyl derivatives can be used advantageously as a low-calorie dietary fiber material which can replace sugar, maltooligosaccharides, and other saccharide materials widely used in the industry to produce protein-containing solid foods. In other words, in one other aspect, the present invention may also provide a method for imparting a texture to a solid food, characterized in that a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof is used in place of a part or whole of a saccharide when manufacturing the solid food which contains a protein and whose texture is to be imparted by adding the saccharide and then heating during its production process. The way to use of the cyclic tetrasaccharide and/or glycosyl derivative thereof in the manufacturing process of the solid foods has already been described in the description of the method for producing the solid foods.

In the present description, imparting texture to a solid food means imparting the breaking stress equivalent to that of a solid food produced in the same manner except that the same amount of saccharide in terms of the solid content is used instead of the cyclic tetrasaccharide and/or glycosyl derivative thereof. More specifically, it may preferably mean imparting the breaking stress in the range of 80% to 120%, preferably 85% to 115%, and more preferably 90% to 110% of the breaking stress of a solid food produced in the same manner except that the same amount of saccharide in terms of the solid content is used instead of the cyclic tetrasaccharide and/or glycosyl derivative thereof. To be added, a saccharide means a monosaccharide or a polymerized product of monosaccharides whose dietary fiber content measured in accordance with the method described in Section 8, Dietary Fiber, (2) High Performance Liquid Chromatography Method (Enzyme-HPLC Method), in "Methods for analyzing nutritional components (Appendix Table 1-3 of Nutritional Labeling Standard)" in "Nutritional Labeling Standard (Notification No. 146 of Ministry of Health, Labour, and Welfare, May, 1996)" is essentially 0%. Such a saccharide may be preferably sugar (sucrose) or maltooligosaccharide, and more preferably sugar (sucrose) or maltotetraose. The method for measuring the breaking stress is as already described.

The present invention is described in further detail below based on Experiments. However, the present invention is not limited thereto.

First, the water-soluble dietary fiber materials and saccharide materials used in the following experimental examples are described.

As a water-soluble dietary fiber material containing the cyclic tetrasaccharide and glycosyl derivative thereof, a cyclic tetrasaccharide syrup (Product Name "TetraRing", manufactured by Hayashibara Co., Ltd.) was used. This cyclic tetrasaccharide syrup is a composition in a syrup form, which contains the cyclic tetrasaccharide and the branched cyclic tetrasaccharides in which one or more glucoses are attached to the cyclic tetrasaccharide. The total cyclic tetrasaccharide content of this cyclic tetrasaccharide syrup was 50% by mass of the total solid content when measured in accordance with an analysis method of the total cyclic tetrasaccharide content described in International Publication No. WO2021/066159.

On the other hand, indigestible dextrin (Product Name "Fibersol-2" manufactured by Matsutani Chemical Industry Co., Ltd.), polydextrose (Product Name "Litesse two" manufactured by Danisco Japan Ltd.), resistant glucan (Product Name "Fit Fiber" manufactured by Nihon Shokuhin Kako Co., Ltd.), and inulin (Product Name "Fuji FF", Fuji Nihon Seito Corporation), which are widely used as low-viscosity water-soluble dietary fiber materials in the food industry, were used for comparison.

Meanwhile, a sugar (Product Name "Pearl Ace Seal Granulated Sugar EF" manufactured by Ensuiko Sugar Refining Co., Ltd.) or a maltooligosaccharide (Product Name "TETRUP" manufactured by Hayashibara Co., Ltd.), which are saccharide materials widely used in processed meat product and processed seafood products, were used as positive controls. The maltooligosaccharide is a syrup composition whose main ingredient is maltotetraose, a tetrasaccharide wherein four glucose molecules are bonded linearly.

The solid concentrations (% by mass) and the dietary fiber contents per solid content (% by mass) for each of the above-described material are shown below. In below Table 1, the solid concentrations of each material except for that of resistant glucan were the values calculated based on the moisture content obtained by the Karl Fischer method in accordance with the conventional method.

The solid concentration of resistant glucan shown in Table 1 was determined by a drying method in accordance with the conventional method. Meanwhile, the lower limit values of the standard values of each product were shown as the dietary fiber contents per solid content.

**[Table 1]**

| | Solid Concentration | Dietary Fiber Content (per solid content) |
|---|---|---|
| Maltooligosaccharide | 72% | 0% |
| Cyclic Tetrasaccharide Syrup | 73% | 72% |
| Indigestible Dextrin | 95% | 85% |
| Polydextrose | 96% | 75% |
| Resistant Glucan | 73% | 75% |
| Inulin | 96% | 91.8% |

### <Experiment 1: Evaluation of Breaking Load of Solid Foods Containing Soy Proteins>

In accordance with the below described method, soy foods in gel forms containing the cyclic tetrasaccharide syrup, which is a water-soluble dietary fiber material containing the cyclic tetrasaccharide and glycosyl derivative thereof, and soy proteins were prepared, and then their breaking loads were measured as an indicator of their texture.

Following the formulation shown in Table 2, a cyclic tetrasaccharide syrup (Product Name "TetraRing", manufactured by Hayashibara Co., Ltd.), indigestible dextrin (Product Name "Fibersol-2", manufactured by Matsutani Chemical Industry Co., Ltd.), or sugar (Product Name "Pearl Ace Seal Granulated Sugar EF" manufactured by Ensuiko Sugar Refining Co., Ltd.) as a positive control, were mixed with and completely dissolved in water. To each of the resulting solution, 75.0 g of a soy protein powder (Product Name "Fujipro FM", manufactured by Fuji Oil Co., Ltd.) was added, followed by stirring and mixing using a commercially available mixer (Product Name "Robot Coupe BLIXER", Model "BLIXER-3D", manufactured by FMI Corporation). The resulting mixtures were filled in casing tubes and heated in a convection steam oven (Model "MIC-6SA3-1", manufactured by Hoshizaki Corporation) at the condition of heating mode "steam mode", heating temperature "90°C", heating time "30 minutes", obtaining test samples 1-1 to 1-3 in gel forms. The obtained test samples were cooled in a refrigerator, and then brought back to room temperature before being subjected to the breaking load measurements described below.

**[Table 2]**

| | Test Sample 1-1 | Test Sample 1-2 | Test Sample 1-3 |
|---|---|---|---|
| Maltooligosaccharide | 100.0 (100.0) | - | - |
| Cyclic Tetrasaccharide Syrup | - | 137.0 (100.0) | - |
| Indigestible Dextrin | - | - | 105.3 (100.0) |
| Soy Protein Powder (Protein Content: 86.0%, Water Content: 5%) | 75.0 | 75.0 | 75.0 |
| Water | 325.0 | 288.0 | 319.7 |
| Total | 500.0 | 500.0 | 500.0 |

| | | | |
|---|---|---|---|
| * Numbers in parentheses () represent solid content. (Unit: g) | | | |

The obtained test samples 1-1 to 1-3 were cut to a thickness of 20 mm, obtaining test pieces. The breaking load of each test piece was measured using a creep meter (Model "RE2-33005C", manufactured by YAMADEN Co., Ltd.). The condition for the breaking load measurement was as shown below.

### <Condition for Creep Meter Measurement>

Plunger: Cylindrical plunger with a diameter of 16 mm
Measurement speed: 0.5 mm/sec
Measurement strain rate: 95%
Temperature of sample: Room temperature (25°C)

Five test pieces were prepared for each test sample, and the breaking load was measured on each test piece. The measurement results are shown as the mean ± S.D. (standard deviation) of the values obtained for the five test pieces. The statistical analysis was conducted using Dunnett's t-test, and a difference of p<0.05 was considered statistically significant.

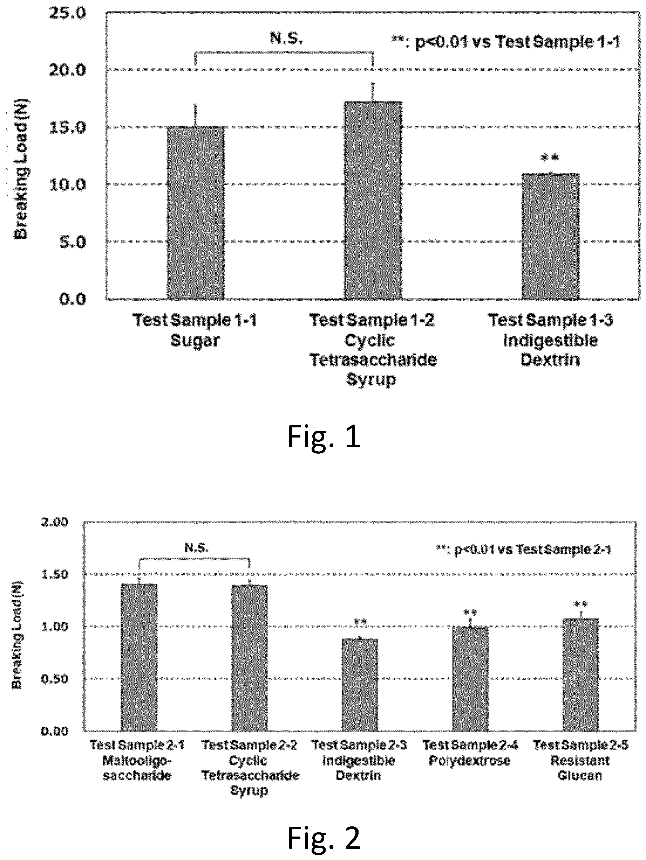

The obtained results were shown in Figure 1. As shown in Figure 1, the breaking load of test sample 1-1, which was prepared by incorporating sugar, a saccharide material, was 15.9 ± 1.9 N, and the breaking load of test sample 1-2, which was prepared by incorporating the cyclic tetrasaccharide syrup, a low-viscosity water-soluble dietary fiber material containing the cyclic tetrasaccharide and glycosyl derivative thereof, instead of sugar, was 17.2 ± 1.6 N. There was no statistically significant difference between the breaking loads of the two samples. This means that, even when the cyclic tetrasaccharide syrup, a water-soluble dietary fiber material, was incorporated in place of sugar, the breaking load of the test sample was maintained. Meanwhile, the dietary fiber content of test sample 1-2 was 14.4% (= ("100.0 g" × "72%")/"500.0 g"). These results indicated that the cyclic tetrasaccharide and glycosyl derivative thereof can impart both the dietary fiber properties and the texture to solid foods containing soy proteins.

On the other hand, the breaking load of test sample 1-3, which was prepared by incorporating indigestible dextrin, a water-soluble dietary fiber material widely used in the food industry, instead of sugar, was 10.9 ± 0.1 N. This breaking load was significantly smaller than that of test sample 1-1 (p<0.01 vs test sample 1-1), which was prepared by incorporating sugar, revealing that the intended texture exhibited by the gelation of the soy proteins was impaired. This result may be due to the inhibition of the gelation of the soy proteins by indigestible dextrin, which is widely used in the food industry as a water-soluble dietary fiber material.

As described above, the cyclic tetrasaccharide syrup used in this experiment contained 50% by mass of the cyclic tetrasaccharide and glycosyl derivative thereof in terms of the total cyclic tetrasaccharide content per solid content. Accordingly, the content of the cyclic tetrasaccharide and glycosyl derivative thereof in test sample 1-2 in terms of the total cyclic tetrasaccharide content was 10% by mass (= ("100.0 g" × "50%")/"500.0 g") of the total mass of the solid food. Whereas, in test sample 1-2, the mass ratio of the content of cyclic tetrasaccharide and glycosyl derivative thereof in terms of the total cyclic tetrasaccharide content and the content of the protein was 1.0:1.3 (= "100.0 g" × "50%" : "75.0 g" × "86%"). This means that, even when the content of the cyclic tetrasaccharide and glycosyl derivative thereof in terms of the total cyclic tetrasaccharide content reaches as high as 77% of the content of the protein, solid foods with excellent texture could be obtained.

### <Experiment 2: Evaluation of Breaking Load of Solid Foods Containing Soy Proteins - Part 2 ->

In accordance with the below described method, soy foods in curd forms containing the cyclic tetrasaccharide syrup, which is a water-soluble dietary fiber material containing the cyclic tetrasaccharide and glycosyl derivative thereof, fats and oils, and soy proteins were prepared, and then their breaking loads were measured as an indicator of their texture. The soy foods in curd forms of this experimental example are different from the soy foods in gel forms of Experiment 1 in that they contain fats and oils as raw materials and their production process contains an emulsifying step.

Following the formulation shown in Table 3, a soy protein (Product Name "Fujipro FM", manufactured by Fuji Oil Co., Ltd.) and a vegetable oil (Product Name "Nissin Canola Oil", manufactured by The Nisshin OilliO Group, Ltd.) were mixed, and then stirred vigorously at 3,600 rpm using a commercially available mixer (Product Name "Robot Coupe BLIXER", Model "BLIXER-3D", manufactured by FMI Corporation). After stirring, the obtained mixture containing the soy protein and the vegetable oil was added with a solution which was prepared by mixing the cyclic tetrasaccharide syrup (Product Name "TetraRing", manufactured by Hayashibara Co., Ltd.), indigestible dextrin (Product Name "Fibersol-2", manufactured by Matsutani Chemical Industry Co., Ltd.), polydextrose (Product Name "Litesse two" manufactured by Danisco Japan Ltd.), resistant glucan (Product Name "Fit Fiber" manufactured by Nihon Shokuhin Kako Co., Ltd.), inulin (Product Name "Fuji FF", Fuji Nihon Seito Corporation), or maltooligosaccharide (Product Name "TETRUP" manufactured by Hayashibara Co., Ltd.) as a positive control, with water and making them completely dissolved in water. After that the mixture was further stirred vigorously at 3,600 rpm. Each of the obtained mixture was filled in a casing tube, and heated in a water bath at 80°C for 30 mins, obtaining test samples 2-1 to 2-5. The obtained test samples were cooled in a refrigerator, and then brought back to room temperature before being subjected to the breaking load measurements described below.

**[Table 3]**

| | Test Sample 2-1 | Test Sample 2-2 | Test Sample 2-3 | Test Sample 2-4 | Test Sample 2-5 |
|---|---|---|---|---|---|
| Maltooligosaccharide | 125.2 (90.1) | - | - | - | - |
| Cyclic Tetrasaccharide Syrup | - | 123.5 (90.1) | - | - | - |
| Indigestible Dextrin | - | - | 94.1 (90.1) | - | - |
| Polydextrose | - | - | - | 93.9 (90.1) | - |
| Resistant Glucan | - | - | - | - | 123.5 (90.1) |
| Soy Protein (Protein Content: 86.0%, Water Content: 5%) | 120.0 | 120.0 | 120.0 | 120.0 | 120.0 |
| Plant Oil (Vegetable Oil) | 120.0 | 120.0 | 120.0 | 120.0 | 120.0 |
| Water | 539.8 | 541.5 | 570.1 | 571.1 | 541.5 |
| Total | 905.0 | 905.0 | 905.0 | 905.0 | 905.0 |

| | | | | | |
|---|---|---|---|---|---|
| * Numbers in parentheses () represent solid content. (Unit: g) | | | | | |

The obtained test samples 2-1 to 2-5, soy foods in curd forms, were cut to a thickness of 20 mm, obtaining test pieces. The breaking load of each test piece was measured using a creep meter (Model "RE2-33005C", manufactured by YAMADEN Co., Ltd.). The condition for the breaking load measurement was as shown below.

### <Condition for Creep Meter Measurement>

Plunger: Sphere plunger with a diameter of 7 mm
Measurement speed: 1 mm/sec
Measurement strain rate: 99%
Temperature of sample: Room temperature (25°C)

Five test pieces were prepared for each test sample, and the breaking load was measured on each test piece. The measurement results are shown as the mean ± S.D. (standard deviation) of the values obtained for the five test pieces. The statistical analysis was conducted using Dunnett's t-test, and a difference of p<0.05 was considered statistically significant.

The obtained results were shown in Figure 2. As shown in Figure 2, the breaking load of test sample 2-1, which was prepared by incorporating the maltooligosaccharide, a saccharide material, was 1.40 ± 0.06 N, and the breaking load of test sample 2-2, which was prepared by incorporating the cyclic tetrasaccharide syrup, a low-viscosity water-soluble dietary fiber material containing the cyclic tetrasaccharide and glycosyl derivative thereof, instead of the maltooligosaccharide, was 1.39 ± 0.05 N. There was no statistically significant difference between the breaking loads of the two samples. This means that, even when the cyclic tetrasaccharide syrup, a water-soluble dietary fiber material, was incorporated in place of the maltooligosaccharide, the breaking load of the test sample was maintained. Although the soy foods in curd forms prepared in this experimental example are different from the soy foods in gel forms prepared in Experiment 1 in that they contain fats and oils as raw materials and their production process contains an emulsifying step, test sample 2-2, which was prepared by incorporating the cyclic tetrasaccharide syrup, exhibited the breaking load equivalent to that of test sample 2-1, which was prepared by incorporating the maltooligosaccharide, a saccharide material widely used in processed meat products or processed seafood products. Meanwhile, the dietary fiber content of test sample 2-2 was 7.2% (= ("90.1 g" × "72%")/"905.0 g"). These results indicate that cyclic tetrasaccharide and glycosyl derivative thereof can impart both the dietary fiber properties and the excellent texture to various types of solid foods containing soy protein, regardless of differences in raw materials and/or production processes.

On the other hand, the breaking loads of test sample 2-3, which was prepared by incorporating indigestible dextrin; test sample 2-4, which was prepared by incorporating polydextrose; and test sample 2-5, which was prepared by incorporating resistant glucan, water-soluble dietary fiber materials widely used in the food industry, as a water-soluble dietary fiber material instead of the cyclic tetrasaccharide syrup, were 0.88 ± 0.2 N, 0.99 ± 0.08 N, and 1.07 ± 0.07 N, respectively. These breaking loads were significantly smaller than that of test sample 2-1 (p<0.01 vs test sample 2-1), which was prepared by incorporating the maltooligosaccharide, revealing that the intended texture exhibited by the gelation of the soy proteins was impaired. These results indicate that it is extremely difficult to obtain protein-containing solid foods that have both excellent texture and dietary fiber properties, when the water-soluble dietary fiber materials widely used in the food industry are used as a water-soluble dietary fiber material.

As mentioned above, the cyclic tetrasaccharide syrup used in this experiment contained 50% by mass of the cyclic tetrasaccharide and glycosyl derivative thereof in terms of the total cyclic tetrasaccharide content per solid content. Accordingly, the content of the cyclic tetrasaccharide and glycosyl derivative thereof in test sample 2-2 in terms of the total cyclic tetrasaccharide content was 5% by mass (= ("90.1 g" × "50%")/"905 g") of the total mass of the solid food. Whereas, in test sample 2-2, the mass ratio of the content of the cyclic tetrasaccharide and glycosyl derivative thereof in terms of the total cyclic tetrasaccharide content and the content of the protein was 1.0:2.3 (= "90.1 g" × "50%" : "120.0 g" × "86%"). This means that, even when the content of the cyclic tetrasaccharide and glycosyl derivative thereof in terms of the total cyclic tetrasaccharide content is 43% of the content of the protein, solid foods with excellent texture could be obtained.

### <Experiment 3: Evaluation of Breaking Load of Solid Foods Containing Soy Proteins - Part 3 ->

In order to investigate the effect of the amount of the cyclic tetrasaccharide syrup in the formulation on solid foods containing soy protein, soy foods in curd forms containing the cyclic tetrasaccharide syrup, which is a water-soluble dietary fiber material containing the cyclic tetrasaccharide and glycosyl derivative thereof, fats and oils, and soy proteins were prepared, and then their breaking loads were measured as an indicator of their texture. Soy foods in curd forms were prepared following the method in Experiment 2, except that the formulation rate of the cyclic tetrasaccharide syrup was changed in accordance with the formulation rate shown in below Table 4, and their breaking loads were measured. The obtained breaking loads were converted into values relative to the breaking load measured for the test sample prepared using the maltooligosaccharide as a positive control (test sample 3-1) set as 100%.

**[Table 4]**

| | Test Sample 3-1 | Test Sample 3-2 | Test Sample 3-3 | Test Sample 3-4 |
|---|---|---|---|---|
| Maltooligosaccharide | 125.2 (90.1) | - | - | - |
| Cyclic Tetrasaccharide Syrup | - | 123.5 (90.1) | 185.2 (135.1) | 246.9 (180.1) |
| Soy Protein Powder (Protein Content: 86.0%, Water Content: 5%) | 120.0 | 120.0 | 120.0 | 120.0 |
| Plant Oil (Vegetable Oil) | 120.0 | 120.0 | 120.0 | 120.0 |
| Water | 539.8 | 541.5 | 479.8 | 418.1 |
| Total | 905.0 | 905.0 | 905.0 | 905.0 |

| | | | | |
|---|---|---|---|---|
| * Numbers in parentheses () represent solid content. (Unit: g) | | | | |

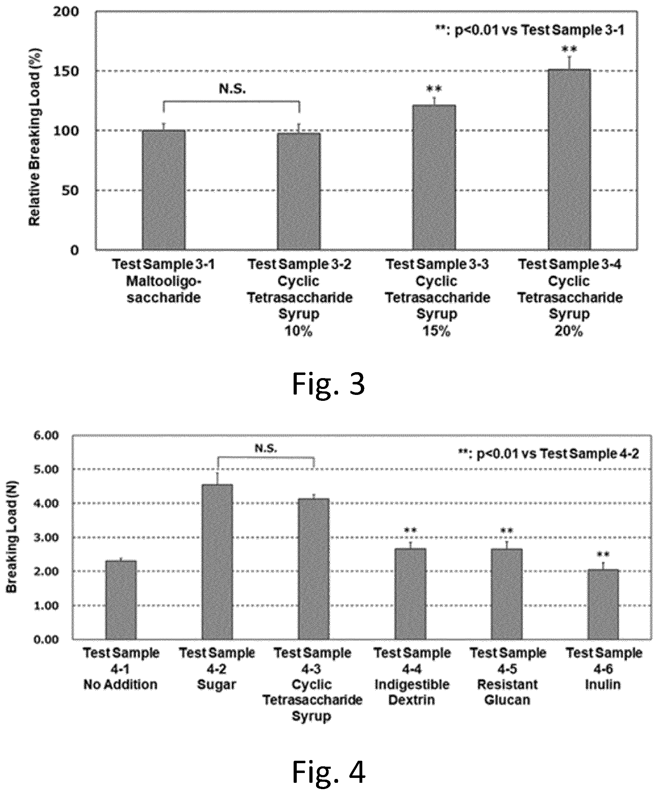

The obtained results were shown in Figure 3. As shown in Figure 3, the relative value of the breaking load of test sample 3-1, which was prepared by incorporating the maltooligosaccharide, a saccharide material, was 100.0 ± 5.8%, and that of test sample 3-2, which was prepared by incorporating the cyclic tetrasaccharide syrup, containing the cyclic tetrasaccharide and glycosyl derivative thereof, at a solid content of 10%, was 97.4 ± 8.2%. There was no statistically significant difference between the breaking loads of the two samples. This means that, even when the cyclic tetrasaccharide syrup, a water-soluble dietary fiber material, was incorporated at the solid content of 10% in place of the maltooligosaccharide, a saccharide material, the breaking load of the test sample was maintained, which was consistent with the results obtained in Experiment 2. On the other hand, among the solid foods prepared by incorporating the cyclic tetrasaccharide syrup containing the cyclic tetrasaccharide and glycosyl derivative thereof instead of the maltooligosaccharide, the relative values of the breaking loads of test sample 3-3 and test sample 3-4, which were prepared by increasing the solid content of the cyclic tetrasaccharide to 15% and 20%, were 121.1 ± 6.4% and 150.9 ± 10.7%, respectively, wherein the statistically significant increase of the breaking loads was observed (p<0.01 vs test sample 3-1). In other words, in test samples 3-2, 3-3 and 3-4, which were prepared by incorporating the cyclic tetrasaccharide syrup at a solid content of 10%, 15%, and 20%, respectively, the breaking loads were increased along with the increase in the amount of the cyclic tetrasaccharide syrup incorporated in the test samples. Meanwhile, the dietary fiber contents of test samples 3-2, 3-3 and 3-4 were 7.2% (= ("90.1 g" × "72%")/"905.0 g"), 10.7% (= ("135.1 g" × "72%")/"905.0 g"), and 14.3% (= ("180.1 g" × "72%")/"905.0 g"), respectively. These results indicate that the cyclic tetrasaccharide and glycosyl derivative thereof can impart both the dietary fiber properties and the excellent texture to solid foods containing soy protein simultaneously at will, by adjusting their formulation amount.

As described above, the cyclic tetrasaccharide syrup used in this experiment contained 50% by mass of the cyclic tetrasaccharide and glycosyl derivative thereof in terms of the total cyclic tetrasaccharide content per solid content. Accordingly, the contents of the cyclic tetrasaccharide and glycosyl derivative thereof in terms of the total cyclic tetrasaccharide content in Test samples 3-2, 3-3 and 3-4 were 5% by mass (= ("90.1 g" × "50%")/"905 g"), 7.5% by mass (= ("135.1 g" × "50%")/"905 g"), and 10% by mass (= ("180.1 g" × "50%")/"905 g") of the total mass of the solid food. Whereas, in test samples 3-2, 3-3, and 3-4, the mass ratios of the content of the cyclic tetrasaccharide and glycosyl derivative thereof in terms of the total cyclic tetrasaccharide content and the content of the protein were 1.0:2.3 (= "90.1 g" × "50%" : "120.0 g" × "86%"), 1.0:1.5 (= "135.1 g" × "50%" : "120.0 g" × "86%"), and 1.0:1.1 (= "180.1 g" × "50%" : "120.0 g" × "86%"), respectively. This means that, even when the content of the cyclic tetrasaccharide and glycosyl derivative thereof in terms of the total cyclic tetrasaccharide content is 43%, 67%, or even as high as 91% of the content of the protein, solid foods with excellent texture were obtained.

### <Experiment 4: Evaluation of Breaking Load of Solid Foods Containing Chicken Egg Proteins>

In accordance with the below described method, egg food products in gel forms were prepared as solid foods containing the cyclic tetrasaccharide syrup, which is a water-soluble dietary fiber material containing the cyclic tetrasaccharide and glycosyl derivative thereof, and a chicken egg were prepared, and then their breaking loads were measured as an indicator of their texture.

Following the formulation shown in Table 5, water and salt, or water, salt and a cyclic tetrasaccharide syrup (Product Name "TetraRing", manufactured by Hayashibara Co., Ltd.), indigestible dextrin (Product Name "Fibersol-2", manufactured by Matsutani Chemical Industry Co., Ltd.), resistant glucan (Product Name "Fit Fiber" manufactured by Nihon Shokuhin Kako Co., Ltd.), inulin (Product Name "Fuji FF", Fuji Nihon Seito Corporation), or sugar (Product Name "Pearl Ace Seal Granulated Sugar EF" manufactured by Ensuiko Sugar Refining Co., Ltd.) as a positive control, were mixed and completely dissolved. Each of the obtained solution was added with chicken eggs (Whole egg, Protein Content: 12% (from STANDARD TABLES OF FOOD COMPOSITION IN JAPAN 2020)) which was filtered through a 710 µm mesh sieve and then was mixed by inverting. Each of the resulting mixture was filled in jelly cups. The jelly cups were sealed and heated in a convection steam oven (Model "MIC-6SA3-1", manufactured by Hoshizaki Corporation) at the condition of heating mode "steam mode", heating temperature "90°C", and heating time "15 minutes", obtaining test samples 4-1 to 4-6. The obtained test samples were cooled in a refrigerator, and then brought back to room temperature before being subjected to the breaking load measurements described below.

**[Table 5]**

| | Test Sample 4-1 | Test Sample 4-2 | Test Sample 4-3 | Test Sample 4-4 | Test Sample 4-5 | Test Sample 4-6 |
|---|---|---|---|---|---|---|
| Sugar | - | 40.0 | - | - | - | - |
| Cyclic Tetrasaccharide Syrup | - | - | 54.8 (40.0) | - | - | - |
| Indigestible dextrin | - | - | - | 42.1 (40.0) | - | - |
| Resistant glucan | - | - | - | - | 54.8 (40.0) | - |
| Inulin | - | - | - | - | - | 41.7 (40.0) |
| Chicken Egg (Protein Content: 12%) | 100.0 | 100.0 | 100.0 | 100.0 | 100.0 | 100.0 |
| Salt | 2.0 | 2.0 | 2.0 | 2.0 | 2.0 | 2.0 |
| Water | 98.0 | 58.0 | 43.2 | 55.9 | 43.2 | 56.3 |
| Total | 200.0 | 200.0 | 200.0 | 200.0 | 200.0 | 200.0 |

| | | | | | | |
|---|---|---|---|---|---|---|
| * Numbers in parentheses () represent solid content. (Unit: g) | | | | | | |

The breaking loads of the obtained test samples 4-1 to 4-6 were measured using a creep meter (Model "RE2-33005C", manufactured by YAMADEN Co., Ltd.). The condition for the breaking load measurement was as shown below.

### <Condition for Creep Meter Measurement>

Plunger: Cylindrical plunger with a diameter of 16 mm
Measurement speed: 0.5 mm/sec
Measurement strain rate: 90%
Temperature of sample: Room temperature (25°C)

Three test pieces were prepared for each test sample, and the breaking load was measured on each test piece. The measurement results are shown as the mean ± S.D. (standard deviation) of the values obtained for the three test pieces. The statistical analysis was conducted using Dunnett's t-test, and a difference of p<0.05 was considered statistically significant.

The obtained results were shown in Figure 4. As shown in Figure 4, the breaking load of test sample 4-2, which was prepared by incorporating sugar, a saccharide material, was 4.54 ± 0.35 N, and the breaking load of test sample 4-3, which was prepared by incorporating the cyclic tetrasaccharide syrup, containing the cyclic tetrasaccharide and glycosyl derivative thereof, instead of the sugar, was 4.13 ± 0.12 N. The breaking loads of both test samples 4-2 and 4-3 were significantly increased compared to that of test sample 4-1, which was prepared without either sugar or the cyclic tetrasaccharide syrup. Meanwhile, there was no statistically significant difference between the breaking loads of test samples 4-2 and 4-3. These results indicated that test sample 4-3, which was prepared by incorporating the cyclic tetrasaccharide syrup, exhibited the favorable texture as good as that of test sample 4-4, which was prepared by incorporating sugar. On the other hand, the dietary fiber content of test sample 4-3 was 14.4% (= ("40.0 g" × "72%")/"200.0 g"). These results indicate that the cyclic tetrasaccharide and glycosyl derivative thereof can impart both the dietary fiber properties and the excellent texture not only to solid foods containing soy proteins but also to solid foods containing various types of proteins including chicken egg proteins.

On the other hand, the breaking loads of test sample 4-4, which was prepared by incorporating indigestible dextrin; test sample 4-5, which was prepared by incorporating resistant glucan; and test sample 4-6, which was prepared by incorporating inulin, water-soluble dietary fiber materials widely used in the food industry, as water-soluble dietary fiber materials instead of the cyclic tetrasaccharide syrup, were 2.66 ± 0.19 N, 2.65 ± 0.22 N, and 2.04 ± 0.21 N, respectively. These breaking loads were significantly smaller than that of test sample 4-2 (p<0.01 vs test sample 4-2), which was prepared by incorporating sugar, revealing that the intended texture exhibited by egg food products in gel forms achieved by the gelation of the chicken egg proteins was impaired in these samples. These results indicate that, regardless of the types of proteins, it is extremely difficult to obtain protein-containing solid foods with both of the excellent texture and the dietary fiber properties, when the conventional low-viscosity water-soluble dietary fiber materials widely used in the food industry are used as water-soluble dietary fiber materials.

As described above, the cyclic tetrasaccharide syrup used in this experiment contained 50% by mass of the cyclic tetrasaccharide and glycosyl derivative thereof in terms of the total cyclic tetrasaccharide content per solid content. Accordingly, the content of the cyclic tetrasaccharide and glycosyl derivative thereof in terms of the total cyclic tetrasaccharide content in test sample 4-3 was 10% by mass (= ("40.0 g" × "50%")/"200 g") of the total mass of the solid food. Whereas, in test sample 4-3, the mass ratio of the content of the cyclic tetrasaccharide and glycosyl derivative thereof in terms of the total cyclic tetrasaccharide content and the content of the protein was 1.0:0.6 (= "40.0 g" × "50%" : "100.0 g" × "12%"). This means that, even when the content of the cyclic tetrasaccharide and glycosyl derivative thereof in terms of the total cyclic tetrasaccharide content is as high as 166% of the content of the protein, solid foods with excellent texture could be obtained.

### <Experiment 5: Evaluation of Breaking Load of Solid Foods Containing Chicken Egg Proteins - Part 2 ->

The above experiments 1 to 4 revealed that the cyclic tetrasaccharide and glycosyl derivative thereof can impart both the excellent texture and the dietary fiber properties to solid foods containing proteins. In this experiment, in order to obtain more detailed insight into what imparts the excellent texture to protein-containing solid foods which contain the cyclic tetrasaccharide and glycosyl derivative thereof, whether the isolated and purified cyclic tetrasaccharide could impart the excellent texture to protein-containing solid foods was examined. The experimental procedure is described below.

Following the formulation shown in Table 6, water, salt and a cyclic tetrasaccharide syrup (Product Name "TetraRing", manufactured by Hayashibara Co., Ltd.), a cyclic tetrasaccharide pentahydrate crystal, or sugar (Product Name "Pearl Ace Seal Granulated Sugar EF" manufactured by Ensuiko Sugar Refining Co., Ltd.) as a positive control, were mixed and completely dissolved. Each of the obtained solution was added with chicken eggs (Whole egg, Protein Content: 12% (from STANDARD TABLES OF FOOD COMPOSITION IN JAPAN 2020)) which was filtered through a 710 µm mesh sieve, and then was mixed by inverting. Each of the resulting mixture was filled in jelly cups. The jelly cups were sealed and heated in a convection steam oven (Model "MIC-6SA3-1", manufactured by Hoshizaki Corporation) at the condition of heating mode "steam mode", heating temperature "90°C", and heating time "15 minutes", obtaining test samples 5-1 to 5-3. The obtained test samples were cooled in a refrigerator, and then brought back to room temperature before being subjected to the breaking load measurements described below. Herein, the cyclic tetrasaccharide pentahydrate crystal was produced in accordance with the method described in International Publication No. WO2002/010361.

As described above, the cyclic tetrasaccharide syrup used in this experiment contained 50% by mass of the cyclic tetrasaccharide and glycosyl derivative thereof in terms of the total cyclic tetrasaccharide content per solid content. Accordingly, the content of the cyclic tetrasaccharide and glycosyl derivative thereof in terms of the total cyclic tetrasaccharide content in test sample 5-1 was 10% by mass of the total mass of the solid food. This is equal to the cyclic tetrasaccharide content of test sample 5-2. In other words, in this experiment, the formulations of both test samples 5-1 and 5-2 were set so that the content of the cyclic tetrasaccharide structure in the two samples are equal and 10% by mass of the total mass of each test sample.

**[Table 6]**

| | Test Sample 5-1 | Test Sample 5-2 | Test Sample 5-3 |
|---|---|---|---|
| Cyclic Tetrasaccharide Syrup | 54.9 (40.0) | - | - |
| Cyclic Tetrasaccharide Pentahydrate Crystal | - | 23.0 (20.0) | - |
| Sugar | - | - | 20.0 (20.0) |
| Chicken egg (Protein Content: 12%) | 100.0 | 100.0 | 100.0 |
| Salt | 2.0 | 2.0 | 2.0 |
| Water | 43.1 | 75.0 | 78.0 |
| Total | 200.0 | 200.0 | 200.0 |

| | | | |
|---|---|---|---|
| * Numbers in parentheses () represent solid content. (Unit: g) | | | |

The breaking loads of the obtained test samples 5-1 to 5-3 were measured using a creep meter (Model "RE2-33005C", manufactured by YAMADEN Co., Ltd.). The condition for the breaking load measurement was as shown below.

### <Condition for Creep Meter Measurement>

Plunger: Cylindrical plunger with a diameter of 16 mm
Measurement speed: 0.5 mm/sec
Measurement strain rate: 90%
Temperature of sample: Room temperature (25°C)

Three test pieces were prepared for each test sample, and the breaking load was measured on each test piece. The measurement results are shown as the mean ± S.D. (standard deviation) of the values obtained for the three test pieces. The statistical analysis was conducted using Dunnett's t-test, and a difference of p<0.05 was considered statistically significant. The statistically significant difference was not observed between the test samples.

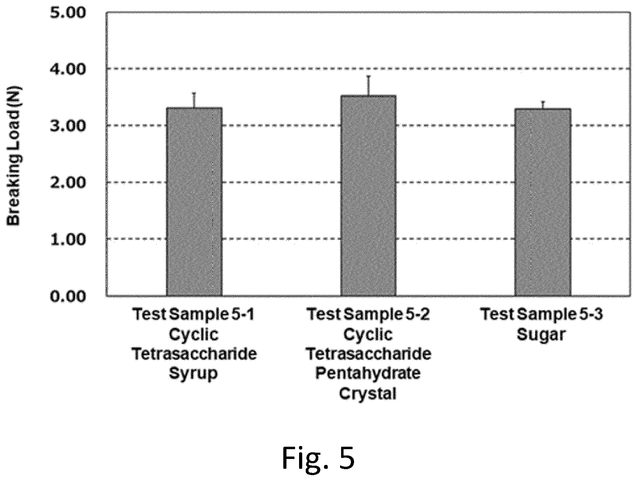

The obtained results are shown in Figure 5. As shown in Figure 5, the breaking load of test sample 5-1, which was prepared by incorporating the cyclic tetrasaccharide syrup, was 3.31 ± 0.26 N, and the breaking load of test sample 5-2, which was prepared by incorporating the cyclic tetrasaccharide pentahydrate crystal, an isolated and purified cyclic tetrasaccharide, instead of the cyclic tetrasaccharide syrup, was 3.52 ± 0.35 N. There was no statistically significant difference between the breaking loads of the two samples, indicating that even when the isolated and purified cyclic tetrasaccharide pentahydrate crystal was used instead of the cyclic tetrasaccharide syrup, the breaking load of the test sample was maintained. Furthermore, test sample 5-2, which was prepared by incorporating the isolated and purified cyclic tetrasaccharide pentahydrate crystal, showed breaking loads as good as those of test sample 5-3, which was prepared by incorporating the equal amount of sugar in terms of the solid content instead of the cyclic tetrasaccharide pentahydrate crystal. The above results indicate that it is the cyclic tetrasaccharide structure that imparts excellent texture to protein-containing solid foods by facilitating gelation of protein-containing solid foods, and further that the cyclic tetrasaccharide and glycosyl derivative thereof containing the cyclic tetrasaccharide structure can be advantageously used as a water-soluble dietary fiber material replacing saccharide materials conventionally used widely in processed meat products and/or processed seafood products.

The present invention is described in further detail below based on Examples. However, the present invention is not limited thereto.

### Example 1

### <Soy Protein Nugget>

Following the formulation shown in Table 7, water, a yeast extract A (Product Name "Vertex IG20", manufactured by Fuji Foods Corporation), a yeast extract B (Product Name "HIMAX GL", manufactured by Fuji Foods Corporation), and a meat-like flavoring (Product Name "Chicken Oil", manufactured by Yokoyama Koryo Ltd.) were mixed and thereby a seasoning liquid was prepared. The obtained seasoning liquid was added to a soy protein grain (Product Name "Apex 950", manufactured by Fuji Oil Co., Ltd.). The mixture was stand for 30 mins for rehydration, and then pulverized using a mixer (Product Name "Robot Coupe BLIXER3", manufactured by FMI Corporation). On the other hand, also following the formulation shown in Table 7, a soy protein powder (Product Name "Fujipro FM", manufactured by Fuji Oil Co., Ltd.) a vegetable oil (Product Name "Nissin Canola Oil", manufactured by The Nisshin OilliO Group, Ltd.), a cyclic tetrasaccharide syrup (Product Name "TetraRing", manufactured by Hayashibara Co., Ltd.), and water were mixed, and then homogenized by stirring the mixture for 2 mins using a commercially available mixer (Product Name "Robot Coupe BLIXER3", manufactured by FMI Corporation), to obtain emulsion curds. The emulsion curds, the rehydrated and pulverized mixture of the soy protein grain and the seasoning liquid, and a dried egg white were placed in a commercially available mixer (Product Name "Tabletop Mixer KENMIX AICOH Premium KMM770", manufactured by AICOHSHA MFG. Co., Ltd.), and then are stirred and mixed, to obtain nugget mixtures. The obtained nugget mixtures were split into 15 g portions, immersed in a batter liquid, and then fried in a vegetable oil at 180°C for 4 mins, to obtain soy protein nuggets. Meanwhile, as a comparative example, soy protein nuggets were prepared following the same procedure as described above except that a maltooligosaccharide (Product Name "TETRUP" manufactured by Hayashibara Co., Ltd.) was used instead of the cyclic tetrasaccharide syrup. The dietary fiber contents of soy protein nuggets of Example 1-1 and Example 1-2 were 3.6% (=("7.0 g" × "72%" × "72%")/"100 g") and 7.2% (=("14.0 g" × "72%" × "72%")/"100 g"), respectively.

**[Table 7]**

| | | Example 1-1 | Example 1-2 | Comparative Example |
|---|---|---|---|---|
| Soy Protein Grain | | 25.0 | 25.0 | 25.0 |
| Seasoning Liquid | Water | 38.5 | 38.5 | 38.5 |
| | Yeast extract A | 1.5 | 1.5 | 1.5 |
| | Yeast extract b | 1.5 | 1.5 | 1.5 |
| | Meat-like flavoring | 0.4 | 0.4 | 0.4 |
| Dried Egg White | | 2.0 | 2.0 | 2.0 |
| Emulsion Curd | Soy Protein Powder | 4.8 | 4.8 | 4.8 |
| | Vegetable oil | 4.8 | 4.8 | 4.8 |
| | Maltooligosaccharide | - | - | 6.9 |
| | Cyclic Tetrasaccharide Syrup | 7.0 | 14.0 | - |
| | Water | 14.5 | 7.5 | 14.6 |
| Total | | 100.0 | 100.0 | 100.0 |

| | | | | |
|---|---|---|---|---|
| (Unit: g) | | | | |

The above prepared soy protein nugget (Example 1-1), which was prepared by incorporating the cyclic tetrasaccharide syrup, was a delicious soy protein nugget with reduced soy smell, exhibiting the favorable texture as good as the soy protein nugget prepared by incorporating the maltooligosaccharide. Meanwhile, the above prepared soy protein nugget (Example 1-2), which was prepared by incorporating the larger amount of the cyclic tetrasaccharide syrup was a delicious soy protein nugget with reduced soy smell, exhibiting the further favorable texture. These results indicate that protein-containing solid foods with both of the dietary fiber properties and the excellent texture as well as the adjusted taste and flavor can be obtained by use of the cyclic tetrasaccharide and glycosyl derivative thereof.

As described above, the cyclic tetrasaccharide syrup used in the present example contained 50% by mass of the cyclic tetrasaccharide and glycosyl derivative thereof in terms of the total cyclic tetrasaccharide content per solid content. Accordingly, the contents of the cyclic tetrasaccharide and glycosyl derivative thereof in the above soy protein nuggets in terms of the total cyclic tetrasaccharide content were 2.5% by mass (Example 1-1) and 5.0% by mass (Example 1-2) of the total mass of the soy protein nuggets. Whereas, in the above soy protein nuggets, the mass ratios of the content of the cyclic tetrasaccharide and glycosyl derivative thereof in terms of the total cyclic tetrasaccharide content and the content of the protein were 1.0:8.8 (Example 1-1) and 1.0:4.4 (Example 1-2). This means that, even when the contents of the cyclic tetrasaccharide and glycosyl derivative thereof in terms of the total cyclic tetrasaccharide content were 11% and 22% of the content of the protein, solid foods with the excellent texture could be obtained.

### Example 2

### <Soy Protein Hamburger Steak>

Following the formulation shown in Table 8, water, a vegetable bouillon powder, a yeast extract (Product Name "Vertex IG20", manufactured by Fuji Foods Corporation), a trehalose (Product Name "TREHA", manufactured by Hayashibara Co., Ltd.), a salt, and a meat-like flavoring (Product Name "Beef Oil B4838", manufactured by Yokoyama Koryo Ltd.) were mixed and thereby a seasoning liquid was prepared. The obtained seasoning liquid was added to a soy protein grain (Product Name "Apex 950", manufactured by Fuji Oil Co., Ltd.). The mixture was stand for 30 mins for rehydration, and then pulverized using a mixer (Product Name "Robot Coupe BLIXER3", manufactured by FMI Corporation). On the other hand, also following the formulation shown in Table 8, a soy protein powder (Product Name "Fujipro FM", manufactured by Fuji Oil Co., Ltd.), a vegetable oil (Product Name "Nissin Canola Oil", manufactured by The Nisshin OilliO Group, Ltd.), a cyclic tetrasaccharide syrup (Product Name "TetraRing", manufactured by Hayashibara Co., Ltd.) and water were mixed, and then homogenized by stirring the mixture for 2 mins using a commercially available mixer (Product Name "Robot Coupe BLIXER3" , manufactured by FMI Corporation), to obtain emulsion curds. The emulsion curds, the rehydrated and pulverized mixture of the soy protein grain and the seasoning liquid, and sauteed onions were placed in a commercially available mixer (Product Name "Tabletop Mixer KENMIX AICOH Premium KMM770", manufactured by AICOHSHA MFG. Co., Ltd.), and then are stirred and mixed, to obtain hamburger steak mixtures. The obtained hamburger steak mixtures were split into 45 g portions, formed, and heated in a convection steam oven (Model "MIC-6SA3-1", manufactured by Hoshizaki Corporation) at the condition of heating mode "combi mode", heating temperature "180°C", and heating time "8 minutes", obtaining soy protein hamburger steaks. Meanwhile, as a comparative example, soy protein hamburger steaks were prepared following the same procedure as above except that a maltooligosaccharide (Product Name "TETRUP" manufactured by Hayashibara Co., Ltd.) was used instead of the cyclic tetrasaccharide syrup. The dietary fiber contents of soy protein hamburger steaks of Example 2-1 and Example 2-2 were 3.1% (=("5.9 g" × "72%" × "72%")/"100 g") and 7.3% (=("14.0 g" × "72%" × "72%")/"100 g"), respectively.

**[Table 8]**

| | | Example 2-1 | Example 2-2 | Comparative Example |
|---|---|---|---|---|
| Soy Protein Grain | | 14.5 | 14.5 | 14.5 |
| Seasoning Liquid | Water | 26.0 | 26.0 | 26.0 |
| | Vegetable Bouillon Powder | 1.3 | 1.3 | 1.3 |
| | Yeast Extract | 1.0 | 1.0 | 1.0 |
| | Trehalose | 1.0 | 1.0 | 1.0 |
| | Salt | 0.4 | 0.4 | 0.4 |
| | Meat-Like Flavoring | 0.2 | 0.2 | 0.2 |
| | Black Pepper | 0.01 | 0.01 | 0.01 |
| Sauteed Onion | | 13.9 | 13.9 | 13.9 |
| Emulsion Curd | Soy Protein Powder | 5.5 | 5.5 | 5.5 |
| | Vegetable Oil | 5.5 | 5.5 | 5.5 |
| | Maltooligosaccharide | - | - | 5.8 |
| | Cyclic Tetrasaccharide Syrup | 5.9 | 11.8 | - |
| | Water | 24.79 | 18.89 | 24.89 |
| Total | 100.0 | 100.0 | 100.0 | |

| | | | | |
|---|---|---|---|---|
| (Unit: g) | | | | |

The above prepared soy protein hamburger steak (Example 2-1), which was prepared by incorporating the cyclic tetrasaccharide syrup, was a delicious soy protein hamburger steak with reduced soy smell, exhibiting the favorable texture as good as the soy protein hamburger steak prepared by incorporating the maltooligosaccharide. Meanwhile, the above prepared soy protein hamburger steak (Example 2-2), which was prepared by incorporating the larger amount of the cyclic tetrasaccharide syrup, was a delicious soy protein hamburger steak with reduced soy smell, exhibiting the further favorable texture. These results indicate that protein-containing solid foods with both of the dietary fiber properties and the excellent texture as well as the adjusted taste and flavor can be obtained by use of the cyclic tetrasaccharide and glycosyl derivative thereof.

As described above, the cyclic tetrasaccharide syrup used in the present examples contained 50% by mass of the cyclic tetrasaccharide and glycosyl derivative thereof in terms of the total cyclic tetrasaccharide content per solid content. Accordingly, the contents of the cyclic tetrasaccharide and glycosyl derivative thereof in the above soy protein hamburger steaks in terms of the total cyclic tetrasaccharide content were 2.1% by mass (Example 2-1) and 4.2% by mass (Example 2-2) of the total mass of the soy protein hamburger streaks. Whereas, in the above soy protein hamburger steaks, the mass ratios of the content of the cyclic tetrasaccharide and glycosyl derivative thereof in terms of the total cyclic tetrasaccharide content and the content of the protein were 1.0:6.6 (Example 2-1) and 1.0:3.3 (Example 2-2). This means that, even when the contents of the cyclic tetrasaccharide and glycosyl derivative thereof in terms of the total cyclic tetrasaccharide content were 15% and 30% of the content of the protein, solid foods with the excellent texture could be obtained.

### Example 3

### <Soy Protein Nugget>

Following the formulation shown in Table 9, water, a trehalose (Product Name "TREHA", manufactured by Hayashibara Co., Ltd.), a yeast extract (Product Name "Vertex IG20", manufactured by Fuji Foods Corporation), and a meat-like flavoring (Product Name: "Chicken Patty Oil B6230", manufactured by Yokoyama Koryo Ltd.) were mixed and thereby a seasoning liquid was prepared. The obtained seasoning liquid was added to a soy protein grain (Product Name "Apex 950", manufactured by Fuji Oil Co., Ltd.). The mixture was stand for 30 mins for rehydration, and then pulverized using a mixer (Product Name "Robot Coupe BLIXER3", manufactured by FMI Corporation). On the other hand, also following the formulation shown in Table 9, a soy protein powder (Product Name "Fujipro FM", manufactured by Fuji Oil Co., Ltd.), a vegetable oil (Product Name "Nissin Canola Oil", manufactured by The Nisshin OilliO Group, Ltd.), a cyclic tetrasaccharide syrup (Product Name "TetraRing", manufactured by Hayashibara Co., Ltd.), and water were mixed, and then homogenized by stirring the mixture for 2 mins using a commercially available mixer (Product Name "Robot Coupe BLIXER3", manufactured by FMI Corporation), to obtain emulsion curds. The emulsion curds, the rehydrated and pulverized mixture of the soy protein grain and the seasoning liquid, a cornstarch, and a soy protein powder were placed in a commercially available mixer (Product Name "Tabletop Mixer KENMIX AICOH Premium KMM770", manufactured by AICOHSHA MFG. Co., Ltd.), and then are stirred and mixed, to obtain nugget mixtures. The obtained nugget mixtures were split into 15 g portions, immersed in a batter liquid, and then fried in a vegetable oil at 180°C for 4 mins, to obtain soy protein nuggets. Meanwhile, as a comparative example, soy protein nuggets were prepared following the same procedure as above except that the cyclic tetrasaccharide syrup was not used. The dietary fiber contents of soy protein nuggets of Example 3-1 and Example 3-2 were 3.1 % (=("65.0 g" × "72%" × "72%")/"1088 g") and 6.2% (=("130.0 g" × "72%" × "72%")/"1088 g"), respectively.

**[Table 9]**

| | Example 3-1 | Example 3-2 | Comparative Example | |
|---|---|---|---|---|
| Soy Protein Grain | 250 | 250 | 250 | |
| Seasoning Liquid | Water | 375 | 375 | 375 |
| | Trehalose | 10 | 10 | 10 |
| | Yeast Extract | 20 | 20 | 20 |
| | Meat-like Flavoring | 3 | 3 | 3 |
| Emulsion Curd | Soy Protein Powder | 50 | 50 | 50 |
| | Vegetable Oil | 50 | 50 | 50 |
| | Cyclic Tetrasaccharide Syrup | 65 | 130 | - |
| | Water | 185 | 120 | 204 |
| Corn Starch | | 60 | 60 | 60 |
| Soy Protein Powder | | 20 | 20 | 20 |
| Total | | 1088 | 1088 | 1042 |

| | | | | |
|---|---|---|---|---|
| (Unit: g) | | | | |

The above prepared soy protein nugget (Example 3-1), which was prepared by incorporating the cyclic tetrasaccharide syrup, was a delicious soy protein nugget with reduced soy smell, exhibiting the favorable texture as good as the soy protein nugget prepared without incorporating the cyclic tetrasaccharide syrup. Meanwhile, the above prepared soy protein nugget (Example 3-2), which was prepared by incorporating the larger amount of the cyclic tetrasaccharide syrup, was a delicious soy protein nugget with reduced soy smell, exhibiting the further favorable texture. These results indicate that protein-containing solid foods with both of the dietary fiber properties and the excellent texture as well as the adjusted taste and flavor can be obtained by use of the cyclic tetrasaccharide and glycosyl derivative thereof.

As described above, the cyclic tetrasaccharide syrup used in the present examples contained 50% by mass of the cyclic tetrasaccharide and glycosyl derivative thereof in terms of the total cyclic tetrasaccharide content per solid content. Accordingly, the contents of the cyclic tetrasaccharide and glycosyl derivative thereof in the above soy protein nuggets in terms of the total cyclic tetrasaccharide content were 2.2% by mass (Example 3-1) and 4.4% by mass (Example 3-2) of the total mass of the soy protein nuggets. Whereas, in the above soy protein nuggets, the mass ratios of the content of the cyclic tetrasaccharide and glycosyl derivative thereof in terms of the total cyclic tetrasaccharide content and the content of the protein were 1.0:9.8 (Example 3-1) and 1.0:4.9 (Example 3-2). This means that, even when the content of the cyclic tetrasaccharide and glycosyl derivative thereof in terms of the total cyclic tetrasaccharide content was 10% and 20% of the content of the protein, solid foods with the excellent texture could be obtained.

### Industrial Applicability

In accordance with the present invention, the excellent texture and dietary fiber property can be imparted also to a solid food prepared by incorporating a plant-derived protein instead of a livestock meat- or fish-derived protein. From various perspectives such as food supply, environmental conservation, and animal welfare, the demand for alternative foods prepared by using plant-based proteins instead of livestock meat- or fish-derived proteins is increasing. In this context, the industrial applicability of the present invention, which may enable production of alternative foods excellent from both taste and health perspectives, is considered to be extremely significant.

## Claims

1. A solid food comprising a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein.

2. The solid food according to claim 1, wherein said protein is a plant-derived protein or an egg-derived protein.

3. The solid food according to claim 2, wherein said plant-derived protein is a protein derived from a plant in the family Fabaceae and said egg-derived protein is a protein derived from a chicken egg.

4. The solid food according to any one of claims 1 to 3, wherein the content of said cyclic tetrasaccharide and/or glycosyl derivative thereof based on the total tetrasaccharide content is equal to or exceeding 1% by mass of the total mass of the solid food.

5. The solid food according to claim 4, wherein the mass ratio (A:B) of the content (A) of said cyclic tetrasaccharide and/or glycosyl derivative thereof based on the total tetrasaccharide content and the content (B) of said protein is in the range of 1:0.1 to 1:20.0.

6. A method for producing a solid food comprising a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof, and a protein, which comprises:
a step of preparing a mixture comprising said cyclic tetrasaccharide and/or glycosyl derivative thereof, and said protein; and
a step of heating the obtained mixture.

7. A method for imparting a texture to a solid food, **characterized in that** a cyclic tetrasaccharide whose structure is represented by cyclo{→6)-α-D-glucopyranosyl-(1→3)-α-D-glucopyranosyl-(1→6)-α-D-glucopyranosyl-(1→3)-α-D-glucopyranosyl-(1→} and/or a glycosyl derivative thereof is used in place of a part or whole of a saccharide when manufacturing the solid food which contains a protein and whose texture is to be imparted by adding the saccharide and then heating during its production process.
